# EUROPÄISCHE PATENTSCHRIFT

(11) **EP 2 704 007 B1**
(45) Veröffentlichungstag und Bekanntmachung des Hinweises auf die Patenterteilung: **01.07.2015**
(21) Anmeldenummer: 13179667.4
(22) Anmeldetag: 08.08.2013
(51) Int. Cl.: G06F 9/445, H05K 1/14, H04L 29/08

(54) **Kommunikationsmodul mit einem Untermodul**
Communication module with a submodule
Module de communication doté d'un sous-module

(30) Priorität: 21.08.2012 DE 102012214793
(43) Veröffentlichungstag der Anmeldung: 05.03.2014
(73) Patentinhaber: BSH Hausgeräte GmbH, 81739 München (DE)
(72) Erfinder: Gaugler, Johannes, 93073 Neutraubling (DE); Goldschalt, Tobias, 83329 Waging a. See (DE); Kolbe, Andreas, 12683 Berlin (DE); Leitl-Nobel, Martin, 86465 Welden (DE); Ranck, Sharon, 89407 Dillingen (DE); Sippel, Matthias, 83329 Waging am See (DE)

(56) Entgegenhaltungen:
- WO-A1-02/41147
- WO-A2-2010/091444
- DE-A1-102009 047 974
- US-A1- 2004 083 471
- US-A1- 2010 121 906

## Beschreibung

Die vorliegende Erfindung betrifft ein Kommunikationsmodul und ein Untermodul.

Aktuell besteht der Trend, Hausgeräte zu vernetzen und internetfähig zu machen. Aufgrund einer Anbindung an das Internet besteht die Möglichkeit ein Speicherupdate des Hausgerätes ohne das Einwirken eines Servicetechnikers vor Ort durchzuführen.

Allerdings kann es während der Übertragung oder des Aufspielens einer neuen Firmware zu einer Unterbrechung des Updatevorgangs kommen. In diesem Fall ist in dem Hausgerät keine vollständige Firmware gespeichert. Dieses ist dann für den weiteren Gebrauch nicht mehr verwendbar, so dass ein Servicetechniker kommen und die entsprechende Komponente lokal neu programmieren müsste. Um dieses Problem zu vermeiden, wird ein doppelter Speicher vorgehalten, in den die neue Firmware geladen und in dem sie überprüft wird. Ergibt die Überprüfung keine Fehler, wird das Hausgerät mit der neuen Firmware neu gestartet. Verläuft dieser Start ebenfalls fehlerfrei, so wird der Speicher mit der neuen Firmware überschrieben und der doppelte Speicher wieder frei gegeben.

Besitzt nun ein System mehrere aktualisierungsfähige Untermodule, die über einen internen Bus verbunden sind, so ist für jedes dieser Untermodule ein doppelter Speicher notwendig um eine fehlertolerante Aktualisierungsfunktion auszuführen.

WO02/41147A1 beschreibt ein Verfahren zum Update einer Vielzahl von tragbaren elektronischen Geräten. WO2010/091444A2 beschreibt eine Vorrichtung zum Update eines Wechselrichters einer Photovoltaikanlage. DE102009047974A1 beschreibt ein Verfahren zur Programmierung eines Steuergeräts eines Fahrzeugs. US2010/0121906A1 beschreibt ein Device Management System für ein Heimnetzwerk.

Es ist die der Erfindung zugrundeliegende Aufgabe, ein Kommunikationsmodul und ein Untermodul anzugeben, bei dem eine sichere Aktualisierung mit reduziertem Speicheraufwand durchgeführt werden kann.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein Kommunikationsmodul zum Herstellen einer Datenverbindung mit einem aktualisierungsfähigen Untermodul gelöst, bei dem das Kommunikationsmodul einen Speicher zum Zwischenspeichern von Programmaktualisierungsdaten für das aktualisierungsfähige Untermodul umfasst. Das Kommunikationsmodul kann in einem Hausgerät vorgesehen sein.

Dadurch wird beispielsweise der technische Vorteil erreicht, dass in dem Kommunikationsmodul ein zentraler Speicher für Programmaktualisierungsdaten bereitgestellt wird. Hierdurch wird eine Aktualisierung eines Speichers eines Hausgerätes mit mehreren Untermodulen über eine WAN/WLAN/LAN-Verbindung ermöglicht, ohne dass ein redundanter Speicher in den Untermodulen vorgehalten werden muss.

In einer vorteilhaften Ausführungsform des Kommunikationsmoduls ist der Speicher ein nicht-flüchtiger Speicher. Dadurch wird beispielsweise der technische Vorteil erreicht, dass die Programmaktualisierungsdaten auch nach einem Trennen einer Stromversorgung erhalten bleiben.

In einer weiteren vorteilhaften Ausführungsform des Kommunikationsmoduls ist das Kommunikationsmodul ausgebildet, die Programmaktualisierungsdaten von einem externen Kommunikationspartner abzurufen. Der externe Kommunikationspartner kann beispielsweise ein Server sein. Dadurch wird beispielsweise der technische Vorteil erreicht, dass die Programmaktualisierungsdaten für eine Vielzahl von Untermodulen abgerufen werden können, beispielsweise von einem Server.

In einer weiteren vorteilhaften Ausführungsform des Kommunikationsmoduls ist das Kommunikationsmodul ausgebildet, die Programmaktualisierungsdaten bei einer Aktivierung des Kommunikationsmoduls abzurufen. Die Aktivierung des Kommunikationsmoduls erfolgt beispielsweise bei einem Einschalten. Dadurch wird beispielsweise der technische Vorteil erreicht, dass bei jedem Start des Kommunikationsmoduls aktuelle Programmaktualisierungsdaten abgerufen werden.

In einer weiteren vorteilhaften Ausführungsform des Kommunikationsmoduls ist das Kommunikationsmodul ausgebildet, die Programmaktualisierungsdaten in periodischen Zeitabständen abzurufen. Dadurch wird beispielsweise der technische Vorteil erreicht, dass auch bei längerer Einschaltzeit des Kommunikationsmoduls stets aktuelle Programmaktualisierungsdaten für die Untermodule bereitgestellt werden.

Gemäß einem zweiten Aspekt der Erfindung wird die Aufgabe durch ein aktualisierungsfähiges Untermodul für ein Kommunikationsmodul gelöst, bei dem das Untermodul ein Startprogramm zum Überprüfen eines Modulprogramms bei einer Aktivierung des Untermoduls umfasst. Dadurch wird beispielsweise der technische Vorteil erreicht, dass ein Modulprogramm hinsichtlich seiner Aktualität überprüft werden kann. Das Modulprogramm kann beispielsweise eine Firmware sein. Das Startprogramm kann beispielsweise ein Bootloader sein.

In einer vorteilhaften Ausführungsform des Untermoduls ist das Startprogramm ausgebildet, Programmaktualisierungsdaten für das Modulprogramm aus dem Kommunikationsmodul abzurufen. Dadurch wird beispielsweise der technische Vorteil erreicht, dass in dem Untermodul kein doppelter Speicher verwendet werden muss, um eine fehlersichere Aktualisierung vorzunehmen.

In einer weiteren vorteilhaften Ausführungsform des Untermoduls umfasst das Untermodul einen nicht-flüchtigen Speicher zum Speichern einer Adresse des Kommunikationsmoduls innerhalb eines Bus-Systems. Dadurch wird beispielsweise der technische Vorteil erreicht, dass das Untermodul die jeweiligen Programmaktualisierungsdaten an einer bestimmten Adresse abrufen kann.

In einer weiteren vorteilhaften Ausführungsform des Untermoduls umfasst das Untermodul einen Energiespeicher zum Versorgen des Untermoduls mit einer elektrischen Leistung während eines Aktualisierungsprozesses. Dadurch wird beispielsweise der technische Vorteil erreicht, dass auch bei einer Unterbrechung der Leistungsversorgung eine Programmaktualisierung vorgenommen werden kann.

Gemäß einem dritten Aspekt der Erfindung wird die Aufgabe durch ein Hausgerät mit einem Kommunikationsmodul nach dem ersten Aspekt und einem aktualisierungsfähigen Untermodul nach dem zweiten Aspekt gelöst. Dadurch wird beispielsweise der technische Vorteil erreicht, dass sich der Aufbau des Hausgerätes vereinfacht.

Unter einem Hausgerät wird ein Gerät verstanden, das zur Haushaltsführung eingesetzt wird. Derartige Geräte sind auch unter dem Begriff "Weiße Ware" bekannt. Das kann ein Haushaltsgroßgerät sein, wie beispielsweise eine Waschmaschine, ein Wäschetrockner, eine Geschirrspülmaschine, ein Gargerät, eine Dunstabzugshaube oder ein Kältegerät, wie beispielsweise ein Kühlschrank, ein Gefrierschrank oder eine Kühlgefrierkombination. Das kann aber auch ein Haushaltskleingerät sein, wie beispielsweise ein Warmwasserbereiter, ein Kaffeevollautomat, eine Küchenmaschine oder ein Staubsauger.

Gemäß einem vierten Aspekt der Erfindung wird die Aufgabe durch ein Verfahren zum Aktualisieren eines Modulprogramms gelöst, mit den Schritten eines Speicherns von Programmaktualisierungsdaten in einem Kommunikationsmodul, eines Überprüfens des Modulprogramms in einem Untermodul und eines Abrufens der Programmaktualisierungsdaten durch das Untermodul aus dem Kommunikationsmodul in Abhängigkeit eines Ergebnisses des Überprüfens des Modulprogramms. Das Verfahren kann ein Verfahren zum Aktualisieren eines Modulprogramms in einem Hausgerät sein. Das Kommunikationsmodul und das Untermodul können in einem Hausgerät angeordnet sein. Dadurch wird beispielsweise der technische Vorteil erreicht, dass eine Programmaktualisierung in den Untermodulen ohne das Bereitstellen eines doppelten Speichers vorgenommen werden kann.

In einer vorteilhaften Ausführungsform des Verfahrens wird das Modulprogramm des Untermoduls mittels der abgerufenen Programmaktualisierungsdaten aktualisiert. Dadurch wird beispielsweise der technische Vorteil erreicht, dass aktuelle Modulprogramme in den Untermodulen verwendet werden.

In einer weiteren vorteilhaften Ausführungsform des Verfahrens werden die Programmaktualisierungsdaten beim Start des Untermoduls abgerufen. Dadurch wird beispielsweise der technische Vorteil erreicht, dass bei jedem Betrieb des Untermoduls aktuelle Modulprogramme verwendet werden.

In einer weiteren vorteilhaften Ausführungsform des Verfahrens ist eine Benutzerinteraktion mit dem Untermodul während eines Abrufens der Programmaktualisierungsdaten gesperrt. Dadurch wird beispielsweise der technische Vorteil erreicht, dass ein Aktualisierungsprozess nicht durch eine Benutzeraktion gestört wird.

In einer weiteren vorteilhaften Ausführungsform des Verfahrens wird das Überprüfen des Modulprogramms in dem Untermodul in periodischen Zeitabständen durchgeführt. Dadurch wird beispielsweise der technische Vorteil erreicht, dass auch bei längeren Einschaltzeiten des Untermoduls eine Aktualisierung der Modulprogramme durchgeführt wird.

Ausführungsbeispiele der Erfindung sind in der Zeichnung dargestellt und werden im Folgenden näher beschrieben.

Es zeigen:
- Fig. 1: eine schematische Ansicht eines Hausgerätes mit einem Kommunikationsmodul und mehreren Untermodulen;
- Fig. 2: ein Ablaufdiagramm beim Überprüfen eines Modulprogramms; und
- Fig. 3: ein Blockdiagramm eines Aktualisierungsverfahrens.

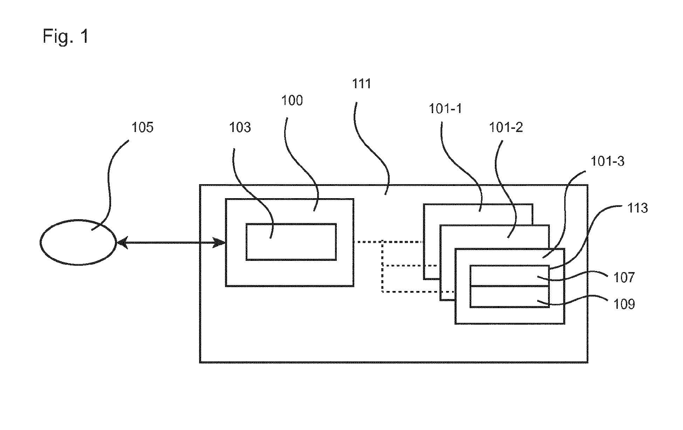

Fig.1 zeigt eine schematische Ansicht eines Hausgerätes 111 mit einem Kommunikationsmodul 100 und mehreren Untermodulen 101-1, 101-2,..., 101-n. Das Kommunikationsmodul 100 kann in oder am Hausgerät 111 verbaut sein.

Das Kommunikationsmodul 100 umfasst eine Kommunikationselektronik, die dazu dient, Daten zwischen einem externen Kommunikationspartner und dem Untermodul 101-1, 101-2,..., 101-n als internem Kommunikationspartner zu übermitteln. Das Kommunikationsmodul 100 kann beispielsweise durch einen elektronischen Chip gebildet sein, der auf eine Leiterplatte aufgesteckt oder aufgelötet wird. Das Kommunikationsmodul 100, das die Kommunikation zwischen dem Hausgerät 111 und dem externen Kommunikationspartner sicherstellt, kann beispielsweise eine separate Kommunikationselektronik sein.

Das Untermodul 101-1, 101-2,..., 101-n kann beispielsweise eine Steuerung des Hausgerätes 111, eine elektrische Leistungsversorgung des Hausgerätes 111 oder jede andere Einheit sein, in der Daten von einem Modulprogramm verarbeitet werden.

Im Kommunikationsmodul 100 wird an zentraler Stelle innerhalb eines Bussystems ein Speicher 103 vorgehalten, um dezentral im System befindliche Untermodule aktualisieren zu können, ohne in diesen einen redundanten Speicher vorhalten zu müssen.

Zu diesem Zweck wird in einem bestimmten Bereich eines Speichers 113 der Untermodule 101-1, 101-2,..., 101-n ein Bereich vorgesehen, der bei einer Aktualisierung eines Modulprogramms, beispielsweise bei einem Firmwareupdate, nicht überschrieben wird. Dieser Bereich dient als Speicher für ein Startprogramm 107.

In dem Speicher 113 befindet sich das Startprogramm 107, beispielsweise ein Bootloader, das bei jedem Startvorgang überprüft, ob das Modulprogramm 109, beispielsweise eine Firmware, im entsprechenden Untermodul 101-1, 101-2,..., 101-n fehlerfrei und aktuell ist und das Untermodul 101-1, 101-2,..., 101-n fehlerfrei gestartet ist.

Ist dies nicht der Fall, werden an einer definierten Adresse innerhalb des Bussystems, d.h, im Kommunikationsmodul, Programmaktualisierungsdaten für das Modulprogramm 109 abgerufen, beispielsweise ein Firmwareupdate. Anschließend wird das Modulprogramm 109 anhand der abgerufenen Programmaktualisierungsdaten aktualisiert.

Während dieses Prozesses kann ein Energiespeicher, wie beispielsweise eine Batterie, dafür sorgen, dass der Aktualisierungsvorgang auch bei einer Unterbrechung der Stromversorgung zu Ende geführt werden kann. Dadurch kann ein unerwünschter Abbruch des Aktualisierungsvorgangs verhindert werden. Zusätzlich kann während des Aktualisierungsvorgangs eine Benutzerinteraktion gesperrt sein, so dass die Aktualisierung nicht durch Benutzereingaben gestört wird.

Durch die zentrale Vorhaltung des Speichers 103 für dezentrale Untermodule 101-1, 101-2,..., 101-n in einem Hausgerät kann ein ansonsten benötigter, redundanter Speicher der Untermodule eingespart werden. Dadurch vereinfacht sich der Aufbau des Hausgerätes 111.

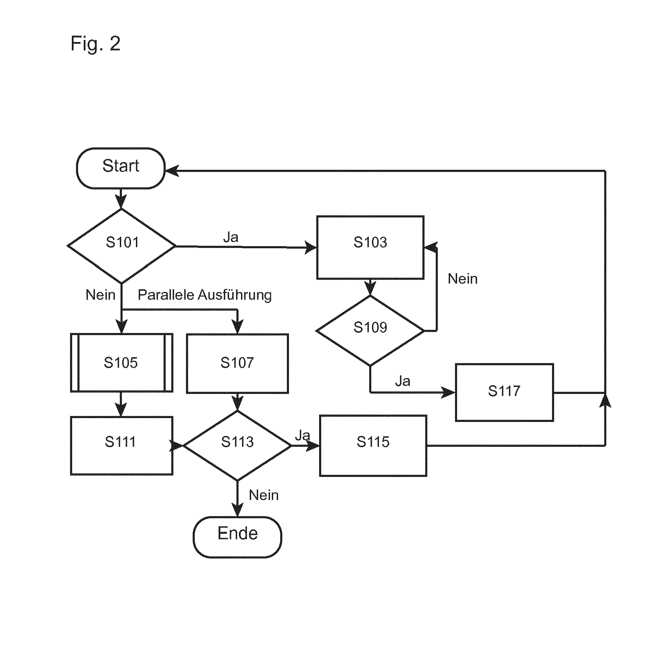

Fig. 2 zeigt ein Ablaufdiagramm beim Überprüfen eines Modulprogramms 109. Zunächst wird in Schritt S101 überprüft, ob beim letzten Start des Modulprogramms 109 ein Fehler aufgetreten ist. Ist dies nicht der Fall, wird in Schritt S105 ein normaler Startvorgang des Modulprogramms 109 ausgeführt. Parallel zu Schritt S105 wird Schritt S107 ausgeführt, in dem der Startvorgang überwacht wird.

Auf den Schritt S105 folgt ein Schritt S111, in dem ein Flag für einen beendeten Startvorgang des Modulprogramms 109 gesetzt wird. In Schritt S113 wird überprüft, ob die Zeit für einen Startvorgang zu lang war. Ist dies nicht der Fall, endet das Verfahren. War die Zeit für einen Startvorgang zu lang, wird in Schritt S115 das Flag für einen Fehler beim letzten Start gesetzt und das Verfahren beginnt erneut.

In Schritt S101 wird erneut überprüft, ob beim letzten Start des Modulprogramms 109 ein Fehler aufgetreten ist. In diesem Fall wird Schritt S103 ausgeführt, in dem eine Aktualisierung des Modulprogramms 109 angefragt und ausgeführt wird. In Schritt S109 wird daraufhin überprüft, ob die Aktualisierung erfolgreich war. Ist dies der Fall, wird in Schritt S117 das Flag für einen Fehler beim letzten Start zurückgesetzt. Ist dies nicht der Fall, wird erneut Schritt S103 ausgeführt und eine Aktualisierung des Modulprogramms 109 angefragt und ausgeführt.

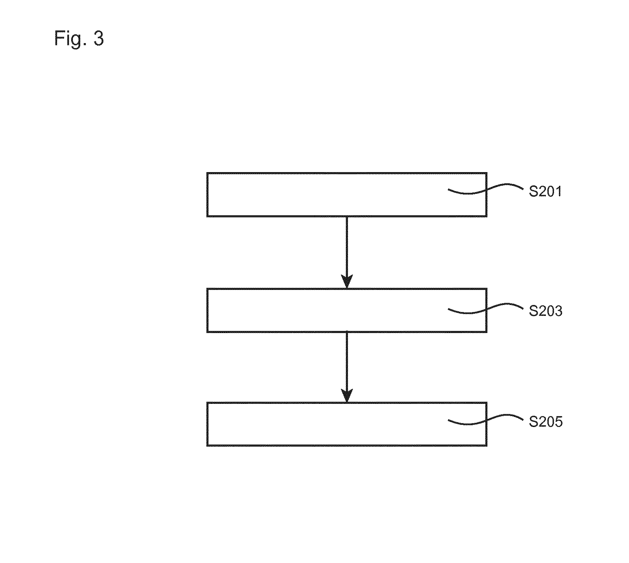

Fig. 3 zeigt ein Blockdiagram eines Aktualisierungsverfahrens. Das Aktualisierungsverfahren eines Modulprogramms in einem Untermodul umfasst den Schritt S201 eines Speicherns von Programmaktualisierungsdaten in dem Kommunikationsmodul 100. Danach wird in Schritt S203 ein Modulprogramm 109 in dem Untermodul 101-1, 101-2,..., 101-n überprüft. Anschließend werden in Schritt S205 die Programmaktualisierungsdaten durch das Untermodul 101-1, 101-2,..., 101-n aus dem Kommunikationsmodul 100 in Abhängigkeit eines Ergebnisses des Überprüfens des Modulprogramms abgerufen.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Kommunikationsmodul
- 101: Untermodul
- 103: Speicher
- 105: Kommunikationspartner
- 107: Startprogramm
- 109: Modulprogramm
- 111: Hausgerät
- S101: Überprüfen, ob Fehler beim letzten Start
- S103: Programaktualisierungsdaten anfragen und ausführen
- S105: Normaler Startvorgang
- S107: Überwachung des Startvorgangs
- S109: Überprüfen, ob Aktualisierung erfolgreich
- S111: Flag für Startvorgang beendet setzen
- S113: Überprüfen, ob Zeit für Startvorgang zu lang
- S115: Flag für Fehler beim letzten Start setzen
- S117: Flag für Fehler beim letzten Start zurücksetzen
- S201: Speichern von Programmaktualisierungsdaten
- S203: Überprüfen eines Modulprogramms
- S205: Abrufen von Programmaktualisierungsdaten

## Patentansprüche

1. Hausgerät (111), wobei das Hausgerät (111) ein Kommunikationsmodul (100) und eine Vielzahl von aktualisierungsfähigen Untermodulen (101-1, 101-2,..., 101-n) umfasst, wobei das Kommunikationsmodul (100) einen Speicher (103) zum Zwischenspeichern von Programmaktualisierungsdaten des Hausgeräts (111) umfasst, wobei das Kommunikationsmodul (100) ausgebildet ist,
- Programmaktualisierungsdaten für ein Modulprogramm (109) eines ersten aktualisierungsfähigen Untermoduls (101-1, 101-2,..., 101-n) der Vielzahl von aktualisierungsfähigen Untermodulen (101-1, 101-2,..., 101-n) von einem externen Kommunikationspartner (105) außerhalb des Hausgeräts (111) abzurufen;
- die Programmaktualisierungsdaten in dem Speicher (103) des Kommunikationsmoduls (100) zu speichern; und
- bei Abruf durch das erste aktualisierungsfähige Untermodul (101-1, 101-2,..., 101-n), dem ersten aktualisierungsfähigen Untermodul (101-1, 101-2,..., 101-n) die Programmaktualisierungsdaten bereitzustellen.

2. Hausgerät (111) nach Anspruch 1, **dadurch gekennzeichnet, dass** der Speicher (103) des Kommunikationsmoduls (100) ein nicht-flüchtiger Speicher ist.

3. Hausgerät (111) nach Anspruch 1 oder 2, **dadurch gekennzeichnet, dass** das Kommunikationsmodul (100) ausgebildet ist, die Programmaktualisierungsdaten bei einer Aktivierung des Kommunikationsmoduls (100) von dem externen Kommunikationspartner (105) abzurufen.

4. Hausgerät (111) nach Anspruch 1, 2 oder 3, **dadurch gekennzeichnet, dass** das Kommunikationsmodul (100) ausgebildet ist, die Programmaktualisierungsdaten in periodischen Zeitabständen abzurufen.

5. Hausgerät (111) nach einem der vorhergehenden Ansprüche, wobei das erste Untermodul (101-1, 101-2,..., 101-n) ein Startprogramm (107) umfasst; wobei das Startprogramm (107) ausgebildet ist,
- das Modulprogramm (109) des ersten Untermoduls (101-1, 101-2,..., 101-n) zu überprüfen; und
- in Abhängigkeit eines Ergebnisses des Überprüfens des Modulprogramms (109), die Programmaktualisierungsdaten für das Modulprogramm (109) aus dem Kommunikationsmodul (100) abzurufen.

6. Hausgerät (111) nach einem der vorhergehenden Ansprüche, **dadurch gekennzeichnet, dass** das erste Untermodul (101-1, 101-2,..., 101-n) einen nicht-flüchtigen Speicher zum Speichern einer Adresse des Kommunikationsmoduls (100) innerhalb eines Bus-Systems des Hausgeräts (111) umfasst.

7. Hausgerät (111) nach einem der vorhergehenden Ansprüche, **dadurch gekennzeichnet, dass** das erste Untermodul (101) einen Energiespeicher zum Versorgen des ersten Untermoduls (101) mit einer elektrischen Leistung während eines Aktualisierungsprozesses umfasst.

8. Hausgerät (111) nach einem der vorhergehenden Ansprüche, wobei die Programmaktualisierungsdaten des Modulprogramms (109) beim Start des ersten Untermoduls (101-1, 101-2,..., 101-n) aus dem Kommunikationsmodul (100) abgerufen werden.

9. Hausgerät (111) nach einem der vorhergehenden Ansprüche, wobei das Modulprogramm (109) des ersten Untermoduls (101-1, 101-2,..., 101-n) mittels der abgerufenen Programmaktualisierungsdaten aktualisiert wird.

10. Verfahren zum Aktualisieren eines Modulprogramms (109) eines ersten aktualisierungsfähigen Untermoduls (101-1, 101-2,..., 101-n) eines Hausgeräts (111), wobei das Hausgerät (111) eine Vielzahl von aktualisierungsfähigen Untermodulen (101-1, 101-2,..., 101-n) umfasst, wobei das Verfahren umfasst:
- Abrufen von Programmaktualisierungsdaten von einem externen Kommunikationspartner (105) außerhalb des Hausgeräts (111) durch ein Kommunikationsmodul (100) des Hausgeräts (111);
- Speichern (S201) der Programmaktualisierungsdaten in dem Kommunikationsmodul (100);
- Überprüfen (S203) des Modulprogramms (109) in dem ersten aktualisierungsfähigen Untermodul (101-1, 101-2,..., 101-n); und
- Abrufen (S205) der Programmaktualisierungsdaten durch das erste aktualisierungsfähige Untermodul (101-1, 101-2,..., 101-n) aus dem Kommunikationsmodul (100) in Abhängigkeit eines Ergebnisses des Überprüfens des Modulprogramms.

11. Verfahren nach Anspruch 10, **dadurch gekennzeichnet, dass** das Modulprogramm (109) des ersten Untermoduls (101-1, 101-2,..., 101-n) mittels der abgerufenen Programmaktualisierungsdaten aktualisiert wird.

12. Verfahren nach Anspruch 10 oder 11, **dadurch gekennzeichnet, dass** die Programmaktualisierungsdaten beim Start des ersten Untermoduls (101-1, 101-2,..., 101-n) abgerufen werden.

13. Verfahren nach einem der Ansprüche 10 bis 12, **dadurch gekennzeichnet, dass** eine Benutzerinteraktion mit dem ersten Untermodul (101-1, 101-2,..., 101-n) während eines Abrufens der Programmaktualisierungsdaten gesperrt ist.

14. Verfahren nach einem der Ansprüche 10 bis 13, **dadurch gekennzeichnet, dass** das Überprüfen (S203) des Modulprogramms (107) in dem ersten Untermodul (101-1, 101-2,..., 101-n) in periodischen Zeitabständen durchgeführt wird.

## Claims

1. Domestic appliance (111), wherein the domestic appliance (111) comprises a communication module (100) and a plurality of updatable submodules (101-1, 101-2,..., 101-n), wherein the communication module (100) comprises a memory (103) for buffering program update data of the domestic appliance (111), wherein the communication module (100) is designed to
- retrieve program update data for a module program (109) of a first updatable submodule (101-1, 101-2,..., 101-n) of the plurality of updatable submodules (101-1, 101-2,..., 101-n) from an external communication partner (105) outside the domestic appliance (111);
- store the program update data in the memory (103) of the communication module (100); and
- provide the program update data to the first updatable submodule (101-1, 101-2,..., 101-n) on retrieval by the first updatable submodule (101-1, 101-2,..., 101-n).

2. Domestic appliance (111) according to claim 1, **characterised in that** the memory (103) of the communication module (100) is a non-volatile memory.

3. Domestic appliance (111) according to claim 1 or 2, **characterised in that** the communication module (100) is designed to retrieve the program update data from the external communication partner (105) on activation of the communication module (100).

4. Domestic appliance (111) according to claim 1, 2 or 3, **characterised in that** the communication module (100) is designed to retrieve the program update data at regular intervals.

5. Domestic appliance (111) according to one of the preceding claims, wherein the first submodule (101-1, 101-2,..., 101-n) comprises a boot program (107); wherein the boot program (107) is designed to
- check the module program (109) of the first submodule (101-1, 101-2,..., 101-n); and
- retrieve the program update data for the module program (109) from the communication module (100) as a function of a result of checking the module program (109).

6. Domestic appliance (111) according to one of the preceding claims, **characterised in that** the first submodule (101-1, 101-2,..., 101-n) comprises a non-volatile memory for storing an address of the communication module (100) within a bus system of the domestic appliance (111).

7. Domestic appliance (111) according to one of the preceding claims, **characterised in that** the first submodule (101) comprises an energy store for supplying the first submodule (101) with electrical power during an update process.

8. Domestic appliance (111) according to one of the preceding claims, wherein the program update data of the module program (109) is retrieved from the communication module (100) on boot-up of the first submodule (101-1, 101-2,..., 101-n).

9. Domestic appliance (111) according to one of the preceding claims, wherein the module program (109) of the first submodule (101-1, 101-2,..., 101-n) is updated by means of the retrieved program update data.

10. Method for updating a module program (109) of a first updatable submodule (101-1, 101-2,..., 101-n) of a domestic appliance (111), wherein the domestic appliance (111) comprises a plurality of updatable submodules (101-1, 101-2,..., 101-n), wherein the method comprises:
- retrieval of program update data from an external communication partner (105) outside the domestic appliance (111) by a communication module (100) of the domestic appliance (111);
- storage (S201) of the program update data in the communication module (100);
- checking (S203) the module program (109) in the first updatable submodule (101-1, 101-2,..., 101-n); and
- retrieval (S205) of the program update data from the communication module (100) by the first updatable submodule (101-1, 101-2,..., 101-n) as a function of a result of checking the module program.

11. Method according to claim 10, **characterised in that** the module program (109) of the first submodule (101-1, 101-2,..., 101-n) is updated by means of the retrieved program update data.

12. Method according to claim 10 or 11, **characterised in that** the program update data is retrieved on boot-up of the first submodule (101-1, 101-2,..., 101-n).

13. Method according to one of claims 10 to 12, **characterised in that** user interaction with the first submodule (101-1, 101-2,..., 101-n) is blocked during retrieval of the program update data.

14. Method according to one of claims 10 to 13, **characterised in that** the checking (S203) of the module program (107) in the first submodule (101-1, 101-2,..., 101-n) is carried out at regular intervals.

## Revendications

1. Appareil électroménager (111), dans lequel l'appareil électroménager (111) comprend un module de communication (100) et une pluralité de sous-modules aptes à effectuer une mise à jour (101-1, 101-2, ..., 101-n), dans lequel le module de communication (100) comprend une mémoire (103) pour la mise en mémoire temporaire de données de mise à jour de programme de l'appareil électroménager (111), dans lequel le module de communication (100) est configuré pour
- consulter des données de mise à jour de programme pour un programme de module (109) d'un premier sous-module apte à effectuer une mise à jour (101-1, 101-2, ..., 101-n) de la pluralité de sous-modules aptes à effectuer une mise à jour (101-1, 101-2, ..., 101-n) par un partenaire de communication externe (105) extérieur à l'appareil électroménager (111) ;
- mettre en mémoire les données de mise à jour de programme dans la mémoire (103) du module de communication (100) ; et
- lors de la consultation par le biais du premier sous-module apte à effectuer une mise à jour (101-1, 101-2, ..., 101-n), mettre les données de mise à jour de programme à la disposition du premier sous-module apte à effectuer une mise à jour (101-1, 101-2, ..., 101-n).

2. Appareil électroménager (111) selon la revendication 1, **caractérisé en ce que** la mémoire (103) du module de communication (100) est une mémoire non volatile.

3. Appareil électroménager (111) selon la revendication 1 ou 2, **caractérisé en ce que** le module de communication (100) est configuré pour consulter les données de mise à jour de programme lors d'une activation du module de communication (100) par le partenaire de communication externe (105).

4. Appareil électroménager (111) selon la revendication 1, 2 ou 3, **caractérisé en ce que** le module de communication (100) est configuré pour consulter les données de mise à jour de programme à des intervalles de temps périodiques.

5. Appareil électroménager (111) selon l'une des revendications précédentes, dans lequel le premier sous-module (101-1, 101-2, ..., 101-n) comprend un programme de démarrage (107), dans lequel le programme de démarrage (107) est configuré pour
- vérifier le programme de module (109) du premier sous-module (101-1, 101-2, ..., 101-n) ; et
- en fonction d'un résultat de la vérification du programme de module (109), consulter les données de mise à jour de programme pour le programme de module (109) à partir du module de communication (100).

6. Appareil électroménager (111) selon l'une des revendications précédentes, **caractérisé en ce que** le premier sous-module (101-1, 101-2, ..., 101-n) comprend une mémoire non volatile pour la mise en mémoire d'une adresse du module de communication (100) à l'intérieur d'un système de bus de l'appareil électroménager (111).

7. Appareil électroménager (111) selon l'une des revendications précédentes, **caractérisé en ce que** le premier sous-module (101) comprend un accumulateur d'énergie pour l'alimentation du premier sous-module (101) avec une puissance électrique pendant un processus de mise à jour.

8. Appareil électroménager (111) selon l'une des revendications précédentes, dans lequel les données de mise à jour de programme du programme de module (109) sont consultées du module de communication (100) lors du démarrage du premier sous-module (101-1, 101-2, ..., 101-n).

9. Appareil électroménager (111) selon l'une des revendications précédentes, dans lequel le programme de module (109) du premier sous-module (101-1, 101-2, ..., 101-n) est mis à jour au moyen des données de mise à jour de programme consultées.

10. Procédé pour la mise à jour d'un programme de module (109) d'un premier sous-module apte à effectuer une mise à jour (101-1, 101-2, ..., 101-n) d'un appareil électroménager (111), dans lequel l'appareil électroménager (111) comprend une pluralité de sous-modules aptes à effectuer une mise à jour (101-1, 101-2, ..., 101-n), dans lequel le procédé comprend :
- la consultation de données de mise à jour de programme par un partenaire de communication externe (105) extérieur à l'appareil électroménager (111) par le biais d'un module de communication (100) de l'appareil électroménager (111) ;
- la mise en mémoire (S201) des données de mise à jour de programme dans le module de communication (100) ;
- la vérification (S203) du programme de module (109) dans le premier sous-module apte à effectuer une mise à jour (101-1, 101-2, ..., 101-n) ; et
- la consultation (S205) des données de mise à jour de programme par le biais du premier sous-module apte à effectuer une mise à jour (101-1, 101-2, ..., 101-n) à partir du module de communication (100) en fonction d'un résultat de la vérification du programme de module.

11. Procédé selon la revendication 10, **caractérisé en ce que** le programme de module (109) du premier sous-module (101-1, 101-2, ..., 101-n) est mis à jour au moyen des données de mise à jour de programme consultées.

12. Procédé selon la revendication 10 ou 11, **caractérisé en ce que** les données de mise à jour de programme sont consultées lors du démarrage du premier sous-module (101-1, 101-2, ..., 101-n).

13. Procédé selon l'une des revendications 10 à 12, **caractérisé en ce qu'**une interaction de l'utilisateur avec le premier sous-module (101-1, 101-2, ..., 101-n) est bloquée pendant une consultation des données de mise à jour de programme.

14. Procédé selon l'une des revendications 10 à 13, **caractérisé en ce que** la vérification (S203) du programme de module (107) dans le premier sous-module (101-1, 101-2, ..., 101-n) est réalisée à des intervalles de temps périodiques.
